# EUROPEAN PATENT APPLICATION

(11) **EP 3 939 721 A1**
(43) Date of publication of application: **19.01.2022**
(21) Application number: 20769644.4
(22) Date of filing: 09.03.2020
(51) Int. Cl.: B22F 3/105, B22F 3/16

(54) **SHAPED BODY MANUFACTURING METHOD AND SHAPED BODY**

(30) Priority: 12.03.2019 JP 2019044898
(71) Applicant: Kawasaki Jukogyo Kabushiki Kaisha, Hyogo 650-8670 (JP)
(72) Inventor: OKADA, Ryutaro, Hyogo, 650-8670 (JP); NOMURA, Yoshimichi, Hyogo, 650-8670 (JP); IGASHIRA, Kenichiro, Hyogo, 650-8670 (JP)
(74) Representative: Dehns
(86) International application number: PCT/JP2020/010064
(87) International publication number: WO 2020/184518

(57) **Abstract**

Provided is a method of producing a shaped article by powder bed fusion using a powder of a gamma prime precipitation strengthening-type Ni-based alloy. The Ni-based alloy contains, in percent by mass, 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C. In applying a laser beam to a layer (3) of the powder along scan lines (4) parallel to one another, a value obtained by dividing a pitch between the scan lines (4) by a laser spot diameter is in the range of 0.2 to 1.0.

## Description

### Technical Field

The present invention relates to a method of producing a shaped article and to a shaped article obtained by the method.

### Background Art

A method of producing a shaped article by powder bed fusion using a powder of a Ni-based alloy is conventionally known. The shaped article produced by this production method and made of the Ni-based alloy is used as a high-temperature part such as that of a gas turbine engine.

In some cases, a gamma prime precipitation strengthening-type Ni-based alloy is used as the Ni-based alloy constituting the powder. The gamma prime precipitation strengthening-type Ni-based alloy is a Ni-based alloy having a composition prepared such that heat treatment of the shaped article produced leads to precipitation of a gamma prime (Ni₃(Al,Ti)) phase for strength enhancement.

It is known that a Ni-based alloy containing Al and Ti is likely to suffer from cracks during welding if the sum of the Al content multiplied by 2 and the Ti content (2Al + Ti) is 6% or more. In powder bed fusion, for example, microcracks having lengths ranging from several micrometers to more than several hundreds of micrometers may be formed in the shaped article produced.

As for a technique for preventing the occurrence of cracks in a gamma prime precipitation strengthening-type Ni-based alloy during welding, for example, Patent Literature 1 describes limiting each of the Si content and the Zr content to less than 0.03% in percent by mass.

### Citation List

### Patent Literature

PTL 1: Japanese Laid-Open Patent Application Publication (Translation of PCT Application) No. 2017-508877

### Summary of Invention

### Technical Problem

However, it is desired to prevent the occurrence of cracks in a gamma prime precipitation strengthening-type Ni-based alloy during welding, in particular to reduce the formation of cracks in a shaped article produced by powder bed fusion, irrespective of whether the Si and Zr contents in the Ni-based alloy are limited.

It is therefore an object of the present invention to provide: a shaped article production method capable of reducing the formation of cracks in a shaped article produced by powder bed fusion using a powder of a gamma prime precipitation strengthening-type Ni-based alloy; and a shaped article obtained by the shaped article production method.

### Solution to Problem

As a result of intensive studies with the goal of solving the above problem, the present inventors have found that in powder bed fusion where a laser beam is applied to a layer of a powder along scan lines parallel to one another, a value obtained by dividing the pitch between the scan lines by the laser spot diameter is correlated with the formation of cracks in the shaped article. The present invention has been made based on this finding.

That is, a shaped article production method of the present invention is a method of producing a shaped article by powder bed fusion using a powder of a gamma prime precipitation strengthening-type Ni-based alloy, wherein the Ni-based alloy contains, in percent by mass, 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C, and in applying a laser beam to a layer of the powder along scan lines parallel to one another, a value obtained by dividing a pitch between the scan lines by a laser spot diameter is in the range of 0.2 to 1.0.

With the above features, the formation of cracks in the shaped article can be reduced.

A shaped article of the present invention is a shaped article made of a Ni-based alloy, the shaped article including a dendritic crystal structure, wherein the Ni-based alloy contains, in percent by mass, 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C, a spacing between branches of a primary dendritic crystal of the dendritic crystal structure is less than 3 µm, and a pole density in pole figure, as measured by EBSD (electron backscatter diffraction), has a maximum of 6 or more.

The "pole density in pole figure" refers to a parameter determined by using as a reference the state where all crystal orientations appear at a uniform density (this state corresponds to a completely randomly oriented structure) and by calculating the factor by which the frequency of appearance of each crystal orientation in a measurement surface is multiplied relative to the frequency of appearance of the crystal orientation in the reference state. The pole density is calculated as MUD (multiples of a uniform density) by analysis using software attached to the EBSD device. A higher value of the MUD indicates that the crystals in the measurement surface are oriented more unevenly in a particular crystal plane.

Known examples of methods for producing a cast article with a high MUD value by casting include unidirectional solidification casting and single-crystal casting. However, in cast articles produced by these casting methods, the spacing between the branches of the primary dendritic crystal of the dendritic crystal structure is as large as more than about 40 µm. In contrast, in a shaped article produced by powder bed fusion using a laser beam as a heat source, the spacing between the branches of the primary dendritic crystal of the dendritic crystal structure is as small as less than 3 µm. Additionally, when, in the powder bed fusion, the value obtained by dividing the pitch between the scan lines by the laser spot diameter is in the range of 0.2 to 1.0 as described above, the maximum of the pole density in pole figure (i.e., the MUD) as measured by EBSD is 6 or more. Therefore, a shaped article having the above features is a shaped article with few cracks.

### Advantageous Effects of Invention

The present invention makes it possible to reduce the formation of cracks in a shaped article produced by powder bed fusion using a powder of a gamma prime precipitation strengthening-type Ni-based alloy.

### Brief Description of Drawings

FIG. 1 illustrates a method of producing a shaped article by powder bed fusion.
FIG. 2 is a graph showing the maximum of the MUD and the crack amount for Examples 1 to 6 and Comparative Examples 1 and 2.
FIG. 3 is a microscope image of Example 4.
FIG. 4 is a microscope image of Comparative Example 1.

### Description of Embodiments

A shaped article production method according to one embodiment of the present invention is a method of producing a shaped article by powder bed fusion using a powder of a gamma prime precipitation strengthening-type Ni-based alloy. In the present embodiment, the heat source used in the powder bed fusion to melt the powder is a laser beam, although the heat source may be an electron beam in some cases.

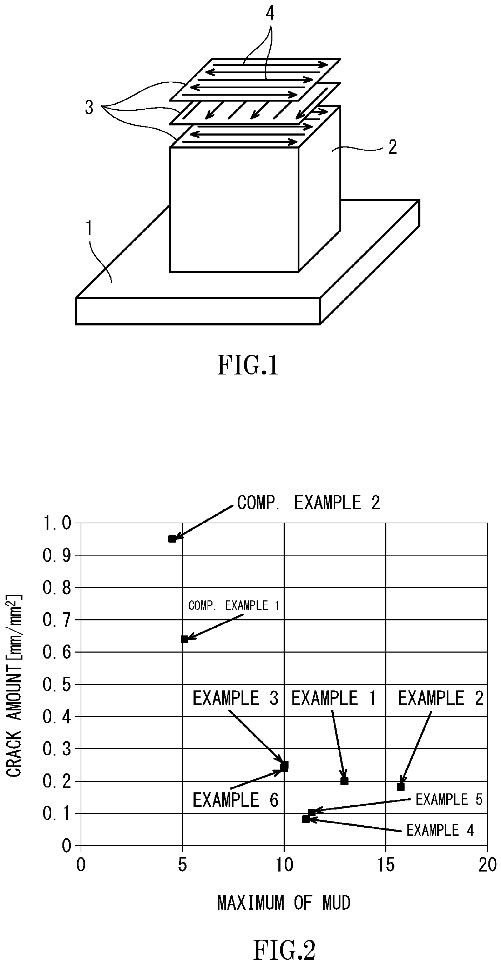

In the powder bed fusion, as shown in FIG. 1, a layer 3 of the powder is formed on a platform 1, and a laser beam is applied to the layer 3 along scan lines 4 parallel to one another. The laser beam applied is focused in the vicinity of the surface of the layer 3. The location, shape, and length of each scan line 4 are determined depending on the cross-sectional shape of the shaped article to be produced. For example, the scan lines 4 may be straight or curved.

FIG. 1 illustrates an example of production of a quadrangular prism-shaped article. In FIG. 1, the laser scan direction is opposite between the adjacent scan lines 4. However, the laser scan direction may be the same for all the scan lines 4.

The application of a laser beam to the layer 3 results in melting and solidification of a part or the whole of the layer 3. After that, the platform 1 is lowered by a distance corresponding to the thickness of the layer 3, and a new layer (hereinafter referred to as "top layer") 3 of the powder is formed on the previously formed layer (hereinafter referred to as "previous layer") 3. A laser beam is then applied to the top layer 3 along the parallel scan lines 4. The configuration made up of the previous layer 3 and the top layer 3 formed on the previous layer 3 is a bed 2, which includes the already-shaped portion and the unmelted powder.

The directions of the scan lines 4 may be the same or different between the top layer 3 and previous layer 3. In the case where the directions of the scan lines 4 are different between the top layer 3 and previous layer 3, the angle of the scan lines 4 of the top layer 3 with respect to the scan lines 4 of the previous layer 3 (the angle will be referred to as "scan rotation angle" hereinafter) can be determined as appropriate. For example, in FIG. 1, the scan rotation angle is 90 degrees.

The above process is repeated, and finally the unmelted powder is removed from the bed 2. In this manner, the shaped article is produced. In such a shaped article, the spacing between the branches of the primary dendritic crystal of the dendritic crystal structure is as small as less than 3 µm.

The particle size distribution of the powder used in the powder bed fusion ranges, for example, from 10 to 60 µm and desirably ranges from 10 to 45 µm. The thickness of the layers 3 is, for example, equal to or greater than the median value of the particle size distribution of the powder and equal to or smaller than three times the median value of the particle size distribution of the powder.

The Ni-based alloy constituting the powder contains, in percent by mass (the same applies hereinafter), 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C as essential components other than Ni. The Ni-based alloy may contain 0.001 to 0.03% B as an essential component. Examples of such a Ni-based alloy include IN 713C ("IN" is an abbreviation of Inconel^{™}; the same applies hereinafter) and IN 713LC. As for Nb and Ta, the Ni-based alloy may be devoid of either Nb or Ta.

The more desired contents of the essential components are as follows: 11 to 14% Cr, 5.5 to 6.5% Al, 3.8 to 5.2% Mo, 1.65 to 2.65% Nb + Ta, 0.5 to 1.0% Ti, 0.05 to 0.15% Zr, and 0.02 to 0.2% C.

The Ni-based alloy may contain at least one of less than 1% Co, less than 0.5% Cu, less than 0.5% Fe, and less than 0.5% Si as an optional component. The rest of the Ni-based alloy, namely the portion other than the components mentioned above, is constituted by Ni and inevitable impurities.

In the present embodiment, in applying a laser beam to each layer 3, a value (L/D) obtained by dividing a pitch L between the scan lines 4 by a laser spot diameter D is in the range of 0.2 to 1.0. The laser spot diameter D refers to a beam diameter at a point at which the intensity of the laser beam falls down to 1/e² of the peak value (i.e., the intensity of the laser beam is about 13.5% of the peak value). Some powder bed fusion devices employing lasers permit the user to set the laser spot diameter, and others do not.

The laser spot diameter D is, for example, from 0.02 to 0.20 mm and desirably from 0.05 to 0.15 mm. The pitch L between the scan lines 4 is, for example, from 0.02 to 0.08 mm. Desirably, the L/D is in the range of 0.3 to 0.9.

The laser scan speed is, for example, from 500 to 3000 mm/s, desirably from 600 to 2000 mm/s, and more desirably from 700 to 1500 mm/s. The laser output is, for example, from 100 to 400 W, desirably from 130 to 350 W, and more desirably from 150 to 300 W.

By virtue of the fact that in applying a laser beam to each layer 3, the value (L/D) obtained by dividing the pitch L between the scan lines 4 by the laser spot diameter D is in the range of 0.2 to 1.0 as described above, the formation of cracks in the shaped article can be reduced. In the thus-produced shaped article with few cracks, the maximum of the MUD (the pole density in pole figure as measured by EBSD) is 6 or more (and can be 10 or more depending on the conditions).

### Examples

Hereinafter, the present invention will be described using examples. The present invention is not limited to the examples described below.

### (Example 1)

Powder bed fusion using a powder containing alloy components corresponding to those of IN 713C was carried out to produce a shaped article in the shape of a cube 10 mm on a side. The particle size distribution of the powder ranged from 16 to 45 µm. Analysis of the alloy components of the powder revealed that the contents of components other than Ni were as follows: 12.41% Cr, 5.94% Al, 4.36% Mo, 1.94% Nb, 0.009% Ta, 0.68% Ti, 0.11% Zr, 0.06% C, 0.01% B, 0.18% Co, 0.02% Cu, 0.20% Fe, and 0.03% Si (the content of inevitable impurities is omitted).

The powder bed fusion device used was EOS M290 manufactured by EOS. In this device, the laser spot diameter D is set to 0.08 mm by the manufacturer. In the production of the shaped article, the thickness of layers was 40 µm, and a laser beam was applied to the layers with a scan line-to-scan line pitch of 0.03 mm, a laser scan speed of 1000 mm/s, a laser output of 180 W, and a scan rotation angle of 90 degrees.

### (Example 2)

A shaped article was produced in the same manner as in Example 1, except that the scan line-to-scan line pitch in the laser beam application to the layers was 0.04 mm.

### (Example 3)

A shaped article was produced in the same manner as in Example 1, except that the scan line-to-scan line pitch in the laser beam application to the layers was 0.05 mm.

### (Example 4)

A shaped article was produced in the same manner as in Example 1, except that the scan line-to-scan line pitch in the laser beam application to the layers was 0.06 mm.

### (Example 5)

A shaped article was produced in the same manner as in Example 4, except that the scan rotation angle was 67 degrees.

### (Example 6)

A shaped article was produced in the same manner as in Example 1, except that the scan line-to-scan line pitch in the laser beam application to the layers was 0.07 mm.

### (Comparative Example 1)

A shaped article was produced in the same manner as in Example 1, except that in the laser beam application to the layers, the scan line-to-scan line pitch was 0.09 mm, the laser scan speed was 1250 mm/s, and the laser output was 270 W.

### (Comparative Example 2)

A shaped article was produced in the same manner as in Example 1, except that in the laser beam application to the layers, the scan line-to-scan line pitch was 0.11 mm, the laser scan speed was 960 mm/s, the laser output was 285 W, and the scan rotation angle was 67 degrees.

The conditions of the production of the shaped articles of Examples 1 to 6 and Comparative Examples 1 and 2 are shown in Table 1. Table 1 further shows the value (L/D) of the scan line-to-scan line pitch L divided by the laser spot diameter D.

**[Table 1]**

| | Scan line-to-scan line pitch L (mm) | L/D | Laser scan speed (mm/s) | Laser output (W) | Scan rotation angle (degrees) |
|---|---|---|---|---|---|
| Example 1 | 0.03 | 0.375 | 1000 | 180 | 90 |
| Example 2 | 0.04 | 0.5 | 1000 | 180 | 90 |
| Example 3 | 0.05 | 0.625 | 1000 | 180 | 90 |
| Example 4 | 0.06 | 0.75 | 1000 | 180 | 90 |
| Example 5 | 0.06 | 0.75 | 1000 | 180 | 67 |
| Example 6 | 0.07 | 0.875 | 1000 | 180 | 90 |
| Comparative Example 1 | 0.09 | 1.125 | 1250 | 270 | 90 |
| Comparative Example 2 | 0.11 | 1.375 | 960 | 285 | 67 |

### (Test)

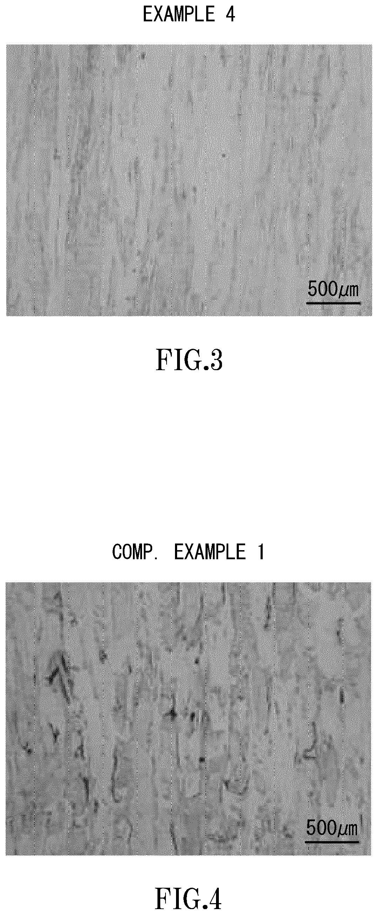

Each of the shaped articles of Examples 1 to 6 and Comparative Examples 1 and 2 was cut along a plane parallel to the layer stacking direction (the upward/downward direction in FIG. 1), and a microscope image of the cut surface was captured. FIG. 3 is a microscope image of Example 4, and FIG. 4 is a microscope image of Comparative Example 1. In each of Examples 1 to 6 and Comparative Examples 1 and 2, the length per unit area of a crack observed in the cut surface was calculated as a crack amount.

Each of the shaped articles of Examples 1 to 6 and Comparative Examples 1 and 2 was cut along a plane perpendicular to the layer stacking direction. For the cut surface, the pole density in pole figure was measured by EBSD. In this measurement, SEM-SU 5000 manufactured by Hitachi, Ltd. and Pegasus Digiview 5 manufactured by EDAX/TSL were used as EBSD devices.

More specifically, the measurement of the pole density in pole figure was preceded by a pretreatment in which the cut surface was mechanically polished with waterproof abrasive paper and diamond abrasive grain and then subjected to polish finishing using colloidal silica. This pretreatment is intended to ensure the measurement accuracy by reducing the number of points where the measurement is impossible. Such a pretreatment is commonly used for Ni-based alloys. After the pretreatment, Kikuchi lines were measured for a 300 µm × 300 µm region of the cut surface with a step size of 3 µm, and the Kikuchi lines were analyzed by analysis software (OIM Data Collection/OIM Analysis ver. 8, manufactured by EDAX/TSL) to give a {100} pole figure as a projection of the {100} pole. The MUD was calculated based on the pole figure. The calculation of the MUD was carried out using a spherical harmonics method, in which the order of expansion was 16 and the half-value width was 5 degrees.

The values of the maximum of the MUD and the values of the crack amount in Examples 1 to 6 and Comparative Examples 1 and 2 are shown in Table 2. The values of the maximum of the MUD and the values of the crack amount in Examples 1 to 6 and Comparative Examples 1 and 2 are shown also by the graph in FIG. 2.

**[Table 2]**

| | Maximum of MUD | Crack amount (mm/mm²) |
|---|---|---|
| Example 1 | 12.9 | 0.20 |
| Example 2 | 15.7 | 0.18 |
| Example 3 | 10.0 | 0.25 |
| Example 4 | 11.0 | 0.08 |
| Example 5 | 11.3 | 0.11 |
| Example 6 | 10.0 | 0.24 |
| Comparative Example 1 | 5.1 | 0.64 |
| Comparative Example 2 | 4.5 | 0.95 |

As is evident from Table 1 and FIG. 2, the crack amount was significantly large in the cases where the scan line-to-scan line pitch in the laser beam application to the layers was more than 0.08 mm, namely in Comparative Examples 1 and 2 where the L/D was more than 1.0. In contrast, the crack amount was significantly small in Examples 1 to 6 where the scan line-to-scan line pitch in the laser beam application to the layers was adjusted to allow the L/D to fall within the range of 0.3 to 0.9 (namely, the range of 0.2 to 1.0).

In Comparative Examples 1 and 2, the maximum of the MUD was less than 6. In contrast, in Examples 1 to 6, the maximum of the MUD was 10 or more (namely, 6 or more). Therefore, a shaped article in which the maximum of the MUD is 6 or more is a shaped article with few cracks.

### Reference Signs List

- 1: platform
- 2: bed
- 3: layer
- 4: scan line

## Claims

1. A method of producing a shaped article by powder bed fusion using a powder of a gamma prime precipitation strengthening-type Ni-based alloy, wherein
the Ni-based alloy contains, in percent by mass, 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C, and
in applying a laser beam to a layer of the powder along scan lines parallel to one another, a value obtained by dividing a pitch between the scan lines by a laser spot diameter is in the range of 0.2 to 1.0.

2. A shaped article made of a Ni-based alloy, the shaped article including a dendritic crystal structure, wherein
the Ni-based alloy contains, in percent by mass, 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C,
a spacing between branches of a primary dendritic crystal of the dendritic crystal structure is less than 3 µm, and
a pole density in pole figure, as measured by EBSD, has a maximum of 6 or more.
